(19) Europäisches Patentamt
European Patent Office
Office européen des brevets

(11) EP 3 748 410 A1

(12) EUROPÄISCHE PATENTANMELDUNG

(43) Veröffentlichungstag:
09.12.2020  Patentblatt 2020/50

(51) Int Cl.:
G02B 6/44 (2006.01)

(21) Anmeldenummer: 20178219.0

(22) Anmeldetag: 04.06.2020

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 04.06.2019  DE 202019103138 U

(71) Anmelder: Haake, Hans Joachim
58455 Witten (DE)

(72) Erfinder: Haake, Hans Joachim
58455 Witten (DE)

(74) Vertreter: Geskes, Christoph
Geskes Patent- und Rechtsanwälte
Gustav-Heinemann-Ufer 74b
50968 Köln (DE)

(54) SPLEISSBOX FÜR LICHTWELLENLEITER

(57) Die Erfindung betrifft eine Spleißbox (10) für Lichtwellenleiter, umfassend
- ein Gehäuse (11), umfassend
- eine linke Seitenwand (13) mit einer Vorderkante (13v) und einer Hinterkante (13h),
- eine rechte Seitenwand (14) mit einer Vorderkante (14v) und einer Hinterkante (14h), und
- eine Rückwand (15);

- eine Lade (12), umfassend
- eine Bodenplatte (16) zur Anbringung einer Spleißkassette (21), und

- eine Frontplatte (17) zur Aufnahme von LWL-Steckverbindern (23);

wobei
- die Rückwand (15) an den Seitenwänden (13, 14) befestigt ist und die Hinterkanten (13h, 14h) miteinander verbindet;
- die Frontplatte (17) an der Bodenplatte (16) befestigt ist;
- die Lade (12) in dem Gehäuse (11) angeordnet ist;
- die Rückwand (15) eine Durchführungsöffnung (18) zur Durchführung eines Leerrohres (20) für Lichtwellenleiter aufweist.

FIG.1

**Beschreibung**

Die Erfindung betrifft eine Spleißbox für Lichtwellenleiter gemäß dem Oberbegriff des Anspruchs 1.

eku Kabel & Systeme GmbH & Co. KG aus Bochum, Deutschland bietet unter dem Link www.eku.de/produkt/19-lwl-spleissbox-serie-ormpv-2-he-ausschwenkbar/ eine Spleißbox gemäß dem Oberbegriff des Anspruchs 1 an. Bei dieser bekannten Spleißbox weist die linke Seitenwand eine Durchführungsöffnung zur Durchführung von Lichtwellenleitern, die auch mit LWL abgekürzt werden, auf. Die LWL werden üblicherweise mit ausreichender Reserve in dem Gehäuse aufgenommen, um ein bequemes Hantieren beim Spleißen zu ermöglichen.

Vor diesem Hintergrund schlägt die Erfindung eine Spleißbox für Lichtwellenleiter gemäß dem Anspruch 1 vor.

Die vorgeschlagene Spleißbox für Lichtwellenleiter umfasst

- ein Gehäuse, umfassend

    - eine linke Seitenwand mit einer Vorderkante und einer Hinterkante,
    - eine rechte Seitenwand mit einer Vorderkante und einer Hinterkante, und
    - eine Rückwand;

- eine Lade, umfassend

    - eine Bodenplatte zur Anbringung einer Spleißkassette, und
    - eine Frontplatte zur Aufnahme von LWL-Steckverbindern;
    wobei

        - die Rückwand an den Seitenwänden befestigt ist und die Hinterkanten miteinander verbindet;

- die Frontplatte an der Bodenplatte befestigt ist;

- die Lade in dem Gehäuse angeordnet ist;

- die Rückwand eine Durchführungsöffnung zur Durchführung von Lichtwellenleitern und/oder eines Leerrohres für Lichtwellenleiter aufweist.

Die Rückwand kann dem Gehäuse eine erforderliche Stabilität verleihen. Die Anordnung der Durchführungsöffnung in der Rückwand ermöglicht eine maximale Ausnutzung der Baubreite der Spleißbox.

Die Spleißbox kann nach Bedarf auf beliebige Weise ausgebildet sein und beispielsweise keine zusätzliche oder wenigstens eine zusätzliche Rückwand und/oder keine zusätzliche oder wenigstens eine zusätzliche Lade aufweisen.

Jede Rückwand kann nach Bedarf auf beliebige Weise ausgebildet sein und beispielsweise keine zusätzliche oder wenigstens eine zusätzliche Durchführungsöffnung aufweisen.

Jede Durchführungsöffnung kann nach Bedarf auf beliebige Weise ausgebildet sein, beispielsweise zur Durchführung keines zusätzlichen oder wenigstens eines zusätzlichen Leerrohres.

Jede Lade kann nach Bedarf auf beliebige Weise ausgebildet sein und beispielsweise keine zusätzliche oder wenigstens eine zusätzliche Bodenplatte und/oder keine zusätzliche oder wenigstens eine zusätzliche Frontplatte aufweisen.

Jede Bodenplatte kann nach Bedarf auf beliebige Weise ausgebildet sein, beispielsweise derart, dass auf oder an ihr keine zusätzliche oder wenigstens eine zusätzliche Spleißkassette angebracht werden kann.

Die LWL und Leerrohre werden mit ausreichender Reserve in dem Gehäuse aufgenommen, um ein bequemes Hantieren beim Spleißen zu ermöglichen.

Bei einer Ausführungsform der Erfindung ist spezifiziert, dass die Lade beweglich an dem Gehäuse gelagert ist.

Die Lade ist also bevorzugt derart in dem Gehäuse angeordnet, dass sie nach vorne herausgenommen, insbesondere ausgezogen oder ausgeschwenkt werden kann. Die Anordnung der Durchführungsöffnung ermöglicht dann eine gute, unbehinderte Beweglichkeit der im Gehäuse aufgenommenen Lichtwellenleiter-Reserve beim Bewegen der Lade.

Dann ist bevorzugt spezifiziert, dass die Lade um eine Hochachse schwenkbar an dem Gehäuse gelagert ist.

Hierdurch wird eine einfache und leichtgängige Lagerung ermöglicht.

Dann ist bevorzugt spezifiziert, dass die Hochachse an einer der Vorderkanten angebracht oder angeordnet ist.

Bei einer Ausführungsform der Erfindung ist spezifiziert, dass die Spleißbox umfasst

- wenigstens ein Befestigungsmittel für wenigstens ein Leerrohr;

wobei

- jedes Befestigungsmittel auf einer der Bodenplatten angebracht ist.

Das Befestigungsmittel ermöglicht eine sichere Fixierung und eine Zugentlastung des Leerrohrs. Durch das Leerrohr können auf bekannte Weise die Lichtwellenleiter von außen in das Innere der Spleißbox geführt werden.

Bei einer Ausführungsform der Erfindung ist spezifiziert, dass die Spleißbox umfasst

- wenigstens eine Spleißkassette;

wobei

- jede Spleißkassette auf einer der Bodenplatten angebracht ist.

Die Spleißkassette ist im Stand der Technik bekannt und nimmt die Spleißstellen zwischen den durch das Leerrohr zugeführten Lichtwellenleitern und den zu der Frontplatte geführten Patchkabeln, die auch als Pigtails bezeichnet werden, auf.

Dann ist bevorzugt spezifiziert, dass das Befestigungsmittel zwischen der Spleißkassette und derjenigen Seitenwand, an deren Vorderkante die Hochachse angebracht ist, angeordnet ist.

Hierdurch wird auf einfache Weise ein vorteilhafter, U-förmiger Verlauf der Leerrohr-Reserve ermöglicht.

Bei einer Ausführungsform der Erfindung ist spezifiziert, dass die Spleißbox umfasst

- wenigstens eine Kupplung für LWL-Stecker;

wobei

- die Frontplatte zu jeder Kupplung eine Aufnahmeöffnung aufweist;
- jede Kupplung in einer der Aufnahmeöffnungen aufgenommen ist.

Jede Kupplung dient beispielhaft dazu, in ihrer zum Inneren der Spleißbox hin weisenden Kupplungsöffnung einen Stecker eines Patchkabels, das von einer Spleißkassette zu der Frontplatte geführt ist, und in ihrer vom Inneren der Spleißbox weg weisenden Kupplungsöffnung einen Stecker eines Lichtwellenleiters, der von der Frontplatte weg geführt ist, aufzunehmen, und stellt somit einen LWL-Steckverbinder dar. Jede Kupplung kann nach Bedarf auf beliebige Weise ausgebildet sein, beispielsweise als Kupplung für Stecker im Format SC, FC, ST, E-2000, E-2000PS, F-3000, LC, LSA, MU, F-SMA, MTRJ, BLINK, ESCON, MIC, URM, MPO, MTP oder M12.

Bei einer Ausführungsform der Erfindung ist spezifiziert, dass die Durchführungsöffnung näher bei derjenigen Seitenwand, an deren Vorderkante die Hochachse angebracht ist, angeordnet ist.

Bei einer Ausführungsform der Erfindung ist spezifiziert, dass

- die folgende Relation gilt

$$U \leq D/R \leq O$$

worin D die Breite der Durchführungsöffnung, R die Breite der Rückwand, U eine Untergrenze und O eine Obergrenze ist;

- U und O ausgewählt sind aus einer Gruppe umfassend die Werte 30 %, 40 %, 50 %, 60 % und 70%.

Diese Wertebereiche ermöglichen einerseits eine ausreichende Stabilität der Rückwand und andererseits ausreichend Freiraum für die Leerrohre.

Bei einer Ausführungsform der Erfindung ist spezifiziert, dass die Spleißbox umfasst

- wenigstens einen linken und wenigstens einen rechten Befestigungswinkel mit jeweils wenigstens einem Längsschenkel und wenigstens einem Querschenkel;

- wenigstens ein linkes und wenigstens ein rechtes Verbindungsmittel;

wobei

- bei jedem Befestigungswinkel

  - der Längsschenkel über das jeweilige Verbindungsmittel mit der Außenseite der jeweiligen Seitenwand verbunden ist;
  - der Querschenkel von dem Längsschenkel nach außen absteht;

- jedes Verbindungsmittel derart ausgebildet ist, dass es eine erste und eine zweite Stellung des jeweiligen Befestigungswinkels ermöglicht;

- bei jedem Befestigungswinkel die Lage oder der Abstand des Querschenkels relativ zu der jeweiligen Vorderkante in der ersten Stellung anders als in der zweiten Stellung ist.

Derartige Befestigungswinkel sind im Stand der Technik bekannt und ermöglichen die Befestigung der Spleißbox an einem üblichen Rack, wie beispielsweise einem 19"-Rack.

Dann kann jedes Verbindungsmittel nach Bedarf auf beliebige Weise ausgebildet sein, beispielsweise derart, dass

- jedes Verbindungsmittel wenigstens ein Loch in dem jeweiligen Längsschenkel, wenigstens einen Gewindebolzen und wenigstens eine Mutter aufweist;

- der Gewindebolzen an der jeweiligen Seitenwand angebracht ist und durch das Loch ragt;

- die Mutter auf dem Gewindebolzen sitzt und den Längsschenkel gegen die Seitenwand drückt.

Dann ist bevorzugt spezifiziert, dass das Loch ein Langloch ist, das in Längsrichtung des Längsschenkels verläuft.

Alternativ oder zusätzlich ist spezifiziert, dass

- jedes Verbindungsmittel wenigstens ein Loch in dem jeweiligen Längsschenkel, wenigstens eine mit dem Loch fluchtende Durchgangsbohrung in der jeweiligen Seitenwand, wenigstens einen Gewindebolzen mit Kopf und wenigstens eine Mutter aufweist;

- der Gewindebolzen von außen nach innen durch das Loch und durch die Durchgangsbohrung geführt ist, sodass sein Köpfe an der Außenseite des jeweiligen Längsschenkels anliegt;

- die Mutter auf dem Gewindebolzen sitzt, an der Innenseite der jeweiligen Seitenwand anliegt und zusammen mit ihrem Gewindebolzen den jeweiligen Längsschenkel gegen die jeweilige Seitenwand drückt.

Dann ist bevorzugt spezifiziert, dass jedes Loch ein Kreisloch ist.

Im Folgenden werden Ausführungsformen der Erfindung beispielhaft anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden und/oder kombiniert werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in

FIG. 1 eine erste Ausführungsform einer erfindungsgemäßen Spleißbox in Draufsicht;

FIG. 2 eine perspektivische Ansicht zu FIG. 1;

FIG. 3 eine zweite Ausführungsform der Spleißbox in einer perspektivischen Ansicht;

FIG. 4 die rechte Seitenansicht zu FIG. 3.

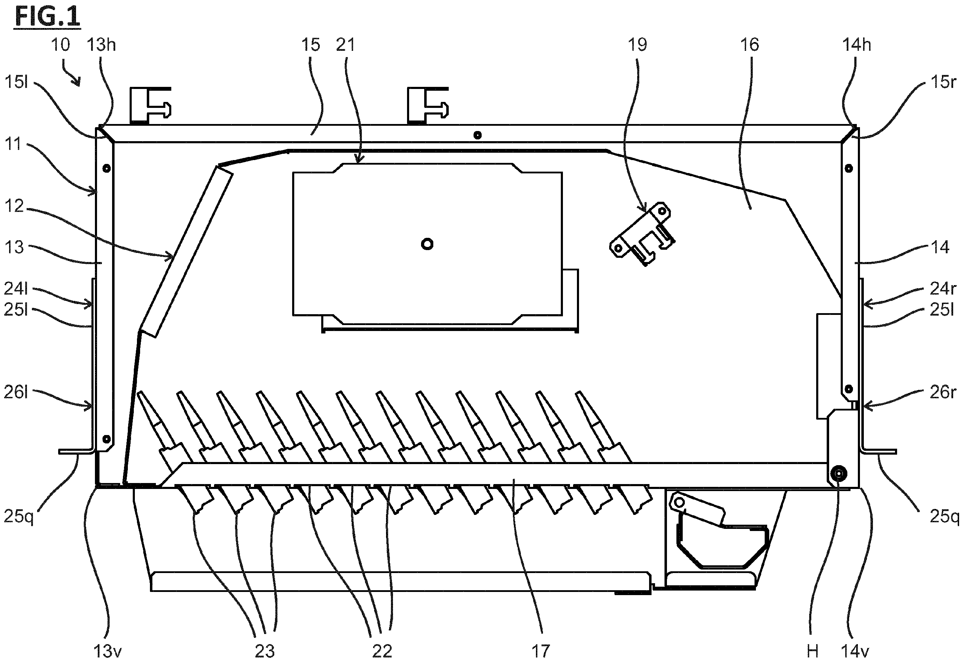

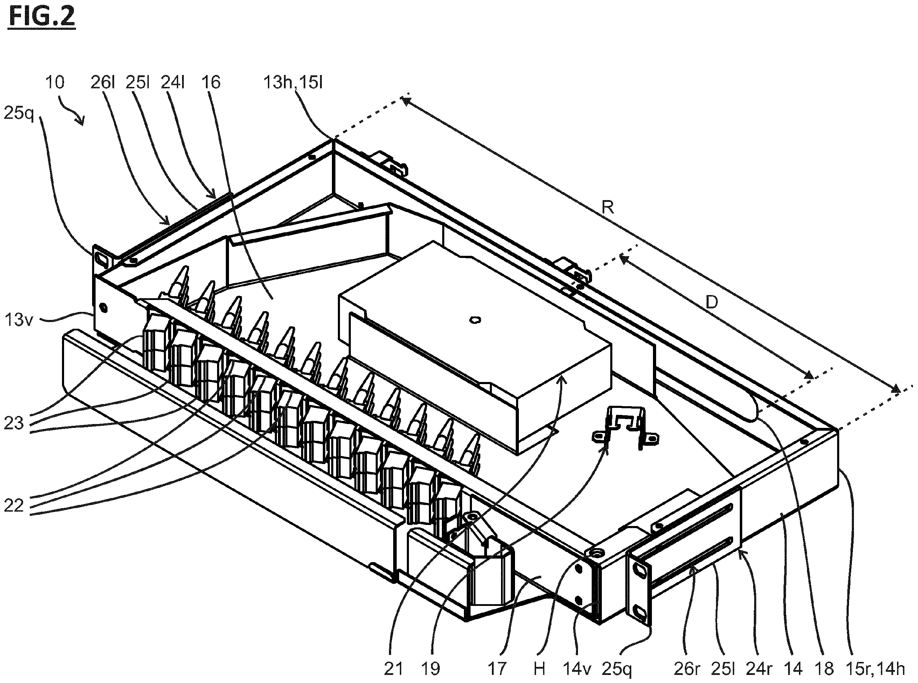

In FIG. 1 und 2 ist eine erste Ausführungsform einer Spleißbox 10 für hier nicht dargestellte Lichtwellenleiter (LWL) schematisch dargestellt. Die Spleißbox 10 umfasst ein Gehäuse 11 und eine Lade 12, die in dem Gehäuse 11 angeordnet und gemäß einer ersten Ausführungsform ausgebildet ist.

Das Gehäuse 11 umfasst eine linke Seitenwand 13 mit einer Vorderkante 13v und einer Hinterkante 13h, eine rechte Seitenwand 14 mit einer Vorderkante 14v und einer Hinterkante 14h, und eine Rückwand 15. Die Rückwand 15 ist an den Seitenwänden 13, 14 befestigt und verbindet die Hinterkanten 13h, 14h miteinander.

Die Lade 12 umfasst eine Bodenplatte 16 zur Anbringung einer Spleißkassette 21 und eine Frontplatte 17 zur Aufnahme von LWL-Steckverbindern 23. Die Frontplatte 17 ist an der Bodenplatte 16 befestigt und weist beispielhaft zwölf Aufnahmeöffnungen 22 zur Aufnahme der LWL-Steckverbinder 23 auf. Die Lade 12 ist um eine Hochachse H schwenkbar an dem Gehäuse 11 gelagert. Die Hochachse H ist beispielhaft an der rechten Vorderkante 14v angebracht.

Die Rückwand 15 weist eine Durchführungsöffnung 18 zur Durchführung von hier nicht dargestellten Leerrohren 20 für Lichtwellenleiter auf. Die Durchführungsöffnung 18 ist beispielhaft näher der rechten Seitenwand 14 als der linken Seitenwand 13 angeordnet, und somit näher bei derjenigen Seitenwand 14, an deren Vorderkante 14v die Hochachse H angebracht ist.

Die Durchführungsöffnung 18 hat eine Breite D, und die Rückwand 15 hat eine Breite R. Es gilt beispielhaft:

$$D/R = 40\ \%.$$

Somit gilt die folgende Relation:

$$U \leq D/R \leq O,$$

worin U eine Untergrenze und O eine Obergrenze ist und U und O ausgewählt sind aus einer Gruppe umfassend die Werte 30 %, 40 %, 50 %, 60 % und 70 %.

Bei dieser Ausführungsform umfasst die Spleißbox 10 zusätzlich beispielhaft einen linken und einen rechten Befestigungswinkel 24l, 24r mit jeweils beispielhaft einem Längsschenkel 25l und einem Querschenkel 25q, sowie beispielhaft ein linkes und ein rechtes Verbindungsmittel 26l, 26r. Bei jedem Befestigungswinkel 24l, 24r ist der Längsschenkel 25l über das jeweilige Verbindungsmittel 26l, 26r mit einer Außenseite der jeweiligen Seitenwand 13, 14 verbunden und steht der Querschenkel 25q von dem Längsschenkel 25l nach außen ab.

Jedes Verbindungsmittel 26 weist beispielhaft zwei Löcher 27 in dem jeweiligen Längsschenkel 25l, vier hier nicht dargestellte Gewindebolzen und vier hier nicht dargestellte Muttern auf. Jedes Loch 27 ist beispielhaft ein Langloch 27, das in Längsrichtung des jeweiligen Längsschenkels 25l verläuft. Bei jedem Längsschenkel 25l verlaufen die beiden Löcher 27 parallel mit vertikalem Abstand zueinander. An der Außenseite jeder Seitenwand 13, 14 sind die vier jeweiligen Gewindebolzen nach außen abstehend angebracht und in Form eines Rechtecks angeordnet, wobei jeweils zwei der Gewindebolzen durch das obere Loch 27 und die zwei anderen Gewindebolzen durch das untere Loch 27 ragen. Auf jedem Gewindebolzen sitzt eine der Muttern, die den jeweiligen Längsschenkel 25l gegen die jeweilige Seitenwand 13, 14 drückt.

Jedes Loch 27 hat eine Länge, die größer als der Abstand der beiden zugeordneten Löcher 27 ist. Hierdurch ist es möglich, jeden Befestigungswinkel 24 in einer vorderen und einer hinteren Stellung an der jeweiligen Seitenwand 13, 14 anzubringen, und außerdem in jeder Zwischenstellung, die zwischen der vorderen und der hinteren Stellung liegt. In der vorderen Stellung, die in den FIG. 1 und 2 dargestellt ist, liegen die Löcher 27 mit ihren hinteren Rändern an den jeweils hinteren Gewindebolzen an und befindet sich der Querschenkel 25q mit geringem Abstand hinter der jeweiligen Vorderkante 13v, 14v. In der hinteren Stellung hingegen liegen die Löcher 27 mit ihren vorderen Rändern an den jeweils vorderen Gewindebolzen an und befindet sich der Querschenkel 25q mit großem Abstand hinter der jeweiligen Vorderkante 13v, 14v.

Somit ist jedes Verbindungsmittel 26l, 26r derart ausgebildet, dass es eine erste, nämlich die vordere, und eine zweite, nämlich die hintere Stellung des jeweiligen Befestigungswinkels 24l, 24r ermöglicht, und sind bei jedem Befestigungswinkel 24l, 24r die Lage und der Abstand des Querschenkels 25q relativ zu der jeweiligen Vorderkante 13v, 14v in der ersten Stellung anders als in der zweiten Stellung.

Außerdem ist es möglich, die Muttern abzuschrauben, die Befestigungswinkel 24 von den Gewindebolzen abzuziehen, um 180° um eine Querachse nach hinten zu drehen und wieder auf die Gewindebolzen aufzuschieben, und schließlich die Muttern aufzuschrauben. Folglich befinden sich die Querschenkel 25q mit noch größerem Abstand hinter der jeweiligen Vorderkante 13v, 14v. Wie zuvor kann jeder Befestigungswinkel 24 in einer vorderen und einer hinteren Stellung sowie in jeder beliebigen Zwischenstellung an der jeweiligen Seitenwand 13, 14 angebracht werden.

Es ist auch möglich, dass zusätzliche Gewindebolzen an den Seitenwänden 13, 14 angebracht sind, die zusätzliche Stellungen der Befestigungswinkel 24 ermöglichen.

Bei dieser Ausführungsform umfasst die Spleißbox 10 zusätzlich beispielhaft ein Befestigungsmittel 19 für Leerrohre 20, das auf der Bodenplatte 16 angebracht ist. Das Befestigungsmittel 19 ist beispielhaft im rechten, der Hochachse H näheren Drittel der Bodenplatte 16 angeordnet. Somit ist das Befestigungsmittel 19 näher der rechten Seitenwand 14 als der linken Seitenwand 13 angeordnet, und somit näher derjenigen Seitenwand 14, an deren Vorderkante 14v die Hochachse H angebracht ist.

Bei dieser Ausführungsform umfasst die Spleißbox 10 zusätzlich beispielhaft eine Spleißkassette 21, die auf der Bodenplatte 16 angebracht ist. Das Befestigungsmittel 19 ist beispielhaft zwischen der Spleißkassette 21 und der rechten Seitenwand 14 angeordnet, und somit zwischen der Spleißkassette 21 und derjenigen Seitenwand 14, an deren Vorderkante 14v die Hochachse H angebracht ist.

Bei dieser Ausführungsform umfasst die Spleißbox beispielhaft zusätzlich zwölf Kupplungen 23 für nicht dargestellte LWL-Stecker. Somit weist die Frontplatte 17 zu jeder Kupplung 23 eine Aufnahmeöffnung 22 auf. Jede Kupplung 23 ist in einer der Aufnahmeöffnungen 22 aufgenommen. Die Kupplungen 23 sind als Doppel-Kupplungen ausgebildet. Dies bedeutet, dass jede Kupplung 23 zwei zum Inneren der Spleißbox 10 hin weisende, innere Kupplungsöffnungen und zwei vom Inneren der Spleißbox 10 weg weisende, äußere Kupplungsöffnungen aufweist. Somit kann jede Kupplung beispielhaft in ihren beiden inneren Kupplungsöffnungen zwei Stecker von zwei Patchkabeln, die von der Spleißkassette 21 zu der Frontplatte 17 geführt sind, und in ihren beiden äußeren Kupplungsöffnungen zwei Stecker von zwei Lichtwellenleitern, der von der Frontplatte 17 weg geführt sind, aufnehmen.

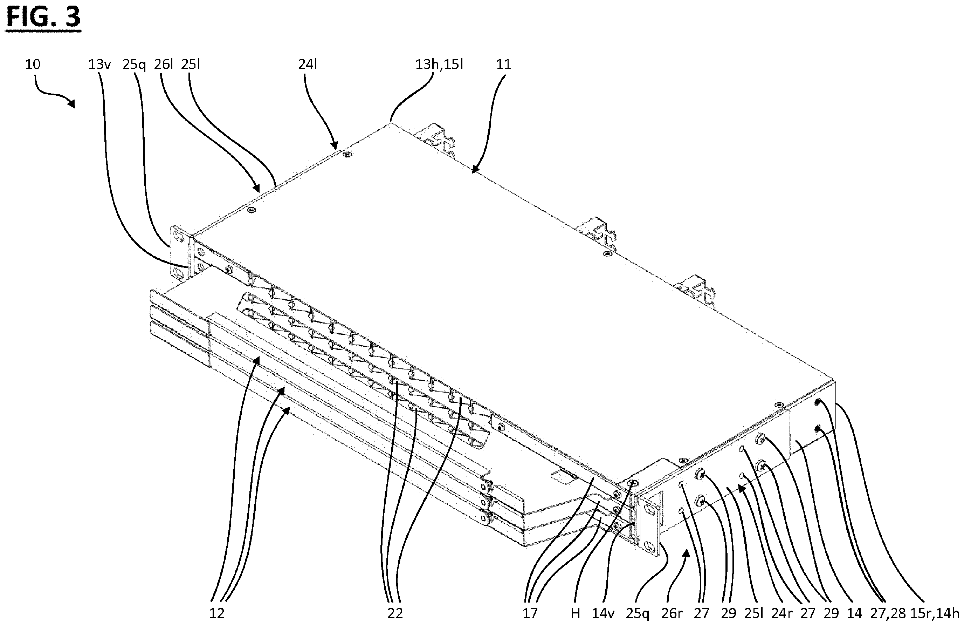

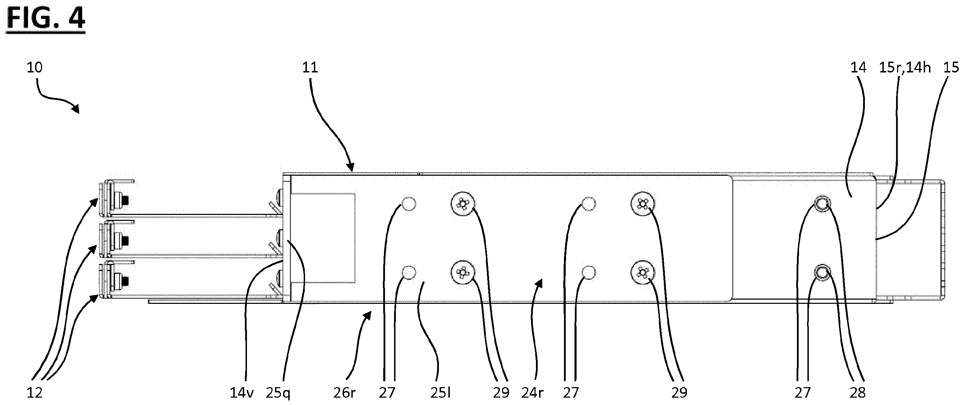

In FIG. 3 und 4 ist eine zweite Ausführungsform der Spleißbox 10 schematisch dargestellt. Diese Ausführungsform ähnelt der ersten Ausführungsform, sodass im Folgenden vor Allem die Unterschiede näher erläutert werden.

Bei dieser Ausführungsform umfasst die Spleißbox 10 beispielhaft drei Laden 12, die gemeinsam in dem Gehäuse 11 angeordnet sind. Die Laden 12 sind fluchtend übereinander angeordnet und um die Hochachse H individuell schwenkbar an dem Gehäuse 11 gelagert, so dass jede Lade 12 unabhängig von den übrigen Laden 12 geschwenkt werden kann. Die Laden 12 sind gemäß einer zweiten Ausführungsform ausgebildet. Diese Ausführungsform ähnelt der ersten Ausführungsform, sodass im Folgenden vor Allem die Unterschiede näher erläutert werden.

Bei dieser Ausführungsform ist bei jeder Lade 12 jede der zwölf Aufnahmeöffnungen 22 dazu ausgebildet, um eine hier nicht dargestellte Kupplung aufzunehmen, die als Einfach-Kupplung ausgebildet ist. Dies bedeutet, dass jede Kupplung eine zum Inneren der Spleißbox 10 hin weisende, innere Kupplungsöffnung und eine vom Inneren der Spleißbox 10 weg weisende, äußere Kupplungsöffnung aufweist. Somit kann jede Kupplung beispielhaft in ihrer einen inneren Kupplungsöffnung einen Stecker eines Patchkabels, das von der Spleißkassette 21 zu der Frontplatte 17 geführt ist, und in ihrer einen äußeren Kupplungsöffnung einen Stecker eines Lichtwellenleiters, der von der Frontplatte 17 weg geführt ist, aufnehmen.

Bei dieser Ausführungsform weist jedes Verbindungsmittel 26 beispielhaft sechs zusätzliche Löcher 27 in dem jeweiligen Längsschenkel 25l und sechs Durchgangsbohrungen 28 in der jeweiligen Seitenwand 13, 14 auf, von denen in FIG. 3 lediglich die beiden hinteren Durchgangsbohrungen 28 in der rechten Seitenwand 14 zu erkennen sind. Jedes Loch 27 ist beispielhaft ein Kreisloch 27. Die Löcher 27 sind in zwei parallelen Reihen mit vertikalem Abstand und paarweise übereinander fluchtend angeordnet. Die Durchgangsbohrungen 28 sind in zwei parallelen Reihen und paarweise übereinander fluchtend angeordnet. Der Abstand zwischen den beiden Reihen von Löchern 27 ist gleich dem Abstand zwischen den beiden Reihen von Durchgangsbohrungen 28. Jeder Längsschenkel 24l, 25l liegt derart an der jeweiligen Seitenwand 13, 14 an, dass seine beiden hinteren Löcher 27 - in FIG. 3 und 4 ganz rechts dargestellt - mit den beiden mittleren Durchgangsbohrungen 28 fluchten und seine beiden Löcher 27, die sich direkt hinter seinen beiden vorderen Löchern 27 - in FIG. 3 und 4 ganz links dargestellt - befinden, mit den beiden vorderen Durchgangsbohrungen 28 fluchten. Die vier jeweiligen Gewindebolzen 29 sind von außen nach innen durch diese vier Löcher 27 und durch diese vier Durchgangsbohrungen 28 geführt, sodass ihre Köpfe an der Außenseite des jeweiligen Längsschenkels 24l, 25l anliegen. Auf jedem Gewindebolzen 29 sitzt eine der nicht dargestellten Muttern, die an der Innenseite der jeweiligen Seitenwand 13, 14 anliegt und zusammen mit ihrem Gewindebolzen 29 den jeweiligen Längsschenkel 24l, 25l gegen die jeweilige Seitenwand 13, 14 drückt. Somit ist jeder Befestigungswinkel 24 in einer vorderen Stellung an der jeweiligen Seitenwand 13, 14 angebracht, in der sich der Querschenkel 25q mit geringem Abstand hinter der jeweiligen Vorderkante 13v, 14v oder gar auf Höhe der jeweiligen Vorderkante 13v, 14v befindet, wie es in FIG. 3 und 4 dargestellt ist.

Zudem ist es möglich, jeden Befestigungswinkel 24 in einer hinteren Stellung an der jeweiligen Seitenwand 13, 14 anzubringen, in der sich der Querschenkel 25q mit großem Abstand hinter der jeweiligen Vorderkante 13v, 14v befindet. Hierzu liegt der jeweilige Längsschenkel 24l, 25l derart an der jeweiligen Seitenwand 13, 14 an, dass seine beiden vorderen Löcher 27 mit den beiden mittleren Durchgangsbohrungen 28 fluchten und seine beiden Löcher 27, die sich direkt vor seinen beiden hinteren Löchern 27 befinden, mit den beiden hinteren Durchgangsbohrungen 28 fluchten. Die vier jeweiligen Gewindebolzen 29 sind dann wieder von außen nach innen durch diese vier Löcher 27 und durch diese vier Durchgangsbohrungen 28 geführt, sodass ihre Köpfe an der Außenseite des jeweiligen Längsschenkels 24l, 25l anliegen.

Des Weiteren sind noch eine vordere und eine hintere Zwischenstellung möglich, die zwischen der vorderen und der hinteren Stellung liegen. In der vorderen Zwischenstellung liegt der jeweilige Längsschenkel 24l, 25l derart an der jeweiligen Seitenwand 13, 14 an, dass seine beiden vorderen Löcher 27 mit den beiden vorderen Durchgangsbohrungen 28 fluchten und seine beiden Löcher 27, die sich direkt vor seinen beiden hinteren Löchern 27 befinden, mit den beiden mittleren Durchgangsbohrungen 28 fluchten. In der hinteren Zwischenstellung liegt der jeweilige Längsschenkel 24l, 25l derart an der jeweiligen Seitenwand 13, 14 an, dass seine beiden hinteren Löcher 27 mit den beiden hinteren Durchgangsbohrungen 28 fluchten und seine beiden Löcher 27, die sich direkt hinter seinen beiden vorderen Löchern 27 befinden, mit den beiden mittleren Durchgangsbohrungen 28 fluchten. Folglich ist der Abstand zwischen dem Querschenkel 25q und der jeweiligen Vorderkante 13v, 14v in der vorderen Zwischenstellung kleiner als in der hinteren Zwischenstellung, und ist der Abstand zwischen dem Querschenkel 25q und der jeweiligen Hinterkante 13h, 14h in der vorderen Zwischenstellung größer als in der hinteren Zwischenstellung.

Somit ist jedes Verbindungsmittel 26l, 26r derart ausgebildet, dass es eine erste, nämlich die vordere, und eine zweite, nämlich die hintere Stellung des jeweiligen Befestigungswinkels 24l, 24r ermöglicht, und sind bei jedem Befestigungswinkel 24l, 24r die Lage und der Abstand des Querschenkels 25q relativ zu der jeweiligen Vorderkante 13v, 14v in der ersten Stellung anders als in der zweiten Stellung.

Außerdem ist es möglich, die Muttern abzuschrauben, die Gewindebolzen 29 aus den Löchern 27 und Durchgangsbohrungen 28 heraus zu ziehen, die Befestigungswinkel 24 um 180° um eine Querachse nach hinten zu drehen, die Gewindebolzen 28 wieder von außen nach innen durch fluchtende Löcher 27 und Durchgangsbohrungen 28 zu führen, und schließlich die Muttern aufzuschrauben. Folglich befinden sich die Querschenkel 25q mit noch größerem Abstand hinter der jeweiligen Vorderkante 13v, 14v. Wie zuvor kann jeder Befestigungswinkel 24 in einer vorderen und einer hinteren Stellung sowie in einer vorderen und einer hinteren Zwischenstellung an der jeweiligen Seitenwand 13, 14 angebracht werden.

Es ist auch möglich, dass die Verbindungsmittel 26 zusätzliche Löcher 27 in dem jeweiligen Längsschenkel 25l und/oder zusätzliche Durchgangsbohrungen 28 in den Seitenwänden 13, 14 aufweisen, die zusätzliche Stellungen der Befestigungswinkel 24 ermöglichen.

**Bezugszeichenliste**

| | |
|---|---|
| 10 | Spleißbox |
| 11 | Gehäuse von 10 |
| 12 | Lade von 10 |
| 13 | linke Seitenwand von 11 |
| 13v/13h | Vorderkante/Hinterkante von 13 |
| 14 | rechte Seitenwand von 11 |
| 14v/14h | Vorderkante/Hinterkante von 14 |
| 15 | Rückwand von 11 |
| 15l/15r | linke/rechte Seitenkante von 15 |
| 16 | Bodenplatte von 12 |
| 17 | Frontplatte von 12 |
| 18 | Durchführungsöffnung von 15 |
| 19 | Befestigungsmittel |
| 20 | Leerrohr |
| 21 | Spleißkassette |
| 22 | Aufnahmeöffnung von 17 |
| 23 | Kupplung/LWL-Steckverbinder |
| 24l/24r | linker/rechter Befestigungswinkel |
| 25l/25q | Längsschenkel/Querschenkel von 24l, 24r |

261/26r    linkes/rechtes Verbindungsmittel
27    Loch von 26l, 26r
28    Durchgangsbohrung von 26l, 26r
29    Gewindebolzen von 26l, 26r
D    Breite von 18
H    Hochachse
O    Obergrenze
R    Breite von 15
U    Untergrenze

**Patentansprüche**

1.  Spleißbox (10) für Lichtwellenleiter, umfassend

    - ein Gehäuse (11), umfassend

        - eine linke Seitenwand (13) mit einer Vorderkante (13v) und einer Hinterkante (13h),
        - eine rechte Seitenwand (14) mit einer Vorderkante (14v) und einer Hinterkante (14h), und
        - eine Rückwand (15);

    - eine Lade (12), umfassend

        - eine Bodenplatte (16) zur Anbringung einer Spleißkassette (21), und
        - eine Frontplatte (17) zur Aufnahme von LWL-Steckverbindern (23);

    wobei

        - die Rückwand (15) an den Seitenwänden (13, 14) befestigt ist und die Hinterkanten (13h, 14h) miteinander verbindet;
        - die Frontplatte (17) an der Bodenplatte (16) befestigt ist;
        - die Lade (12) in dem Gehäuse (11) angeordnet ist;

    **dadurch gekennzeichnet, dass**

        - die Rückwand (15) eine Durchführungsöffnung (18) zur Durchführung eines Leerrohres (20) für Lichtwellenleiter aufweist.

2.  Spleißbox (10) gemäß Anspruch 1, **dadurch gekennzeichnet, dass**

        - die Lade (12) beweglich an dem Gehäuse (11) gelagert ist.

3.  Spleißbox (10) gemäß Anspruch 2, **dadurch gekennzeichnet, dass**

        - die Lade (12) um eine Hochachse (H) schwenkbar an dem Gehäuse (11) gelagert ist.

4.  Spleißbox (10) gemäß Anspruch 3, **dadurch gekennzeichnet, dass**

        - die Achse (H) an einer der Vorderkanten (14v) angebracht ist.

5.  Spleißbox (10) gemäß einem oder mehreren der vorherigen Ansprüche, **gekennzeichnet durch**

        - ein Befestigungsmittel (19) für ein Leerrohr (20);

    wobei

        - das Befestigungsmittel (19) auf der Bodenplatte (16) angebracht ist.

6.  Spleißbox (10) gemäß einem oder mehreren der vorherigen Ansprüche, **gekennzeichnet durch**

        - eine Spleißkassette (21);

    wobei

        - die Spleißkassette (21) auf der Bodenplatte (16) angebracht ist.

7.  Spleißbox (10) gemäß den Ansprüchen 4 bis 6, **dadurch gekennzeichnet, dass**

        - das Befestigungsmittel (19) zwischen der Spleißkassette (21) und derjenigen Seitenwand (14), an deren Vorderkante (14v) die Hochachse (H) angebracht ist, angeordnet ist.

8.  Spleißbox (10) gemäß einem oder mehreren der vorherigen Ansprüche, **gekennzeichnet durch**

        - wenigstens eine Kupplung (23) für LWL-Stecker;

    wobei

        - die Frontplatte (17) zu jeder Kupplung (23) eine Aufnahmeöffnung (22) aufweist;
        - jede Kupplung (23) in einer der Aufnahmeöffnungen (22) aufgenommen ist.

9.  Spleißbox (10) gemäß einem oder mehreren der vorherigen Ansprüche und Anspruch 4, **dadurch gekennzeichnet, dass**

        - die Durchführungsöffnung (18) näher bei derjenigen Seitenwand (14), an deren Vorderkante (14v) die Hochachse (H) angebracht ist, angeordnet ist.

10. Spleißbox (10) gemäß einem oder mehreren der vorherigen Ansprüche, **dadurch gekennzeichnet, dass**

- die folgende Relation gilt

$$U \leq D/R \leq O$$

worin D die Breite der Durchführungsöffnung (18), R die Breite der Rückwand (15), U eine Untergrenze und O eine Obergrenze ist;
- U und O ausgewählt sind aus einer Gruppe umfassend die Werte 30 %, 40 %, 50 %, 60 % und 70 %.

**11.** Spleißbox (10) gemäß einem oder mehreren der vorherigen Ansprüche, **gekennzeichnet durch**

- einen linken und einen rechten Befestigungswinkel (24l, 24r) mit jeweils einem Längsschenkel (25l) und einem Querschenkel (25q);
- ein linkes und ein rechtes Verbindungsmittel (26l, 26r);

wobei

- bei jedem Befestigungswinkel (24l, 24r)

- der Längsschenkel (25l) über das jeweilige Verbindungsmittel (26l, 26r) mit der Außenseite der jeweiligen Seitenwand (13, 14) verbunden ist;
- der Querschenkel (25q) von dem Längsschenkel (25l) nach außen absteht;

- jedes Verbindungsmittel (26l, 26r) derart ausgebildet ist, dass es eine erste und eine zweite Stellung des jeweiligen Befestigungswinkels (24l, 24r) ermöglicht;
- bei jedem Befestigungswinkel (24, 24r) die Lage oder der Abstand des Querschenkels (25q) relativ zu der jeweiligen Vorderkante (13v, 14v) in der ersten Stellung anders als in der zweiten Stellung ist.

**12.** Spleißbox (10) gemäß Anspruch 11, **dadurch gekennzeichnet, dass**

- jedes Verbindungsmittel (26l, 26r) ein Loch (27) in dem jeweiligen Längsschenkel (25l), einen Gewindebolzen und eine Mutter aufweist;
- der Gewindebolzen an der jeweiligen Seitenwand (13, 14) angebracht ist und durch das Loch (27) ragt;
- die Mutter auf dem Gewindebolzen sitzt und den Längsschenkel (25l) gegen die Seitenwand (13, 14) drückt.

**13.** Spleißbox (10) gemäß Anspruch 12, **dadurch gekennzeichnet, dass**

- das Loch (27) ein Langloch ist, das in Längsrichtung des Längsschenkels (25l) verläuft.

FIG.1

EP 3 748 410 A1

## FIG.2

# FIG. 3

EP 3 748 410 A1

10  13v  25q  26l  25l  24l  13h,15l  11

12  22  17  H  14v  25q  26r  27  29  25l  24r  27  29  14  27,28 15r,14h

**FIG. 4**

**Europäisches Patentamt**
**European Patent Office**
**Office européen des brevets**

# EUROPÄISCHER RECHERCHENBERICHT

Nummer der Anmeldung

EP 20 17 8219

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 295 04 191 U1 (KRONE AG [DE]) 28. März 1996 (1996-03-28) | 1,2,5,6, 8,10 | INV. G02B6/44 |
| A | * das ganze Dokument * | 11-13 | |
| X | DE 43 29 184 A1 (SIEMENS AG [DE]) 2. März 1995 (1995-03-02) * Abbildungen 1-3 * | 1-10 | |
| X | US 4 898 448 A (COOPER DAVID A [US]) 6. Februar 1990 (1990-02-06) * Abbildungen 1-3 * | 1,2,5,6, 8,11-13 | |
| X | US 2017/276892 A1 (GELING BERNARDUS JOHANNES NICOLAS [BE] ET AL) 28. September 2017 (2017-09-28) * Abbildungen 1,3,5,7 * | 1-6,8 | |
| X | JP 2004 361893 A (KAWAMURA ELECTRIC INC) 24. Dezember 2004 (2004-12-24) * Abbildungen 1-4 * | 1,2,5,6, 8,10 | |
| | | | RECHERCHIERTE SACHGEBIETE (IPC) |
| X | US 2005/111809 A1 (GIRAUD WILLIAM J [US] ET AL) 26. Mai 2005 (2005-05-26) * Abbildungen 1-10 * | 1,2,6,8, 11 | G02B |

Der vorliegende Recherchenbericht wurde für alle Patentansprüche erstellt

| Recherchenort | Abschlußdatum der Recherche | Prüfer |
|---|---|---|
| Berlin | 27. Oktober 2020 | Ciarrocca, Marco |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 17 8219

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-10-2020

| Im Recherchenbericht angeführtes Patentdokument | | Datum der Veröffentlichung | Mitglied(er) der Patentfamilie | | Datum der Veröffentlichung |
|---|---|---|---|---|---|
| DE 29504191 | U1 | 28-03-1996 | KEINE | | |
| DE 4329184 | A1 | 02-03-1995 | KEINE | | |
| US 4898448 | A | 06-02-1990 | EP | 0341027 A2 | 08-11-1989 |
| | | | ES | 2044103 T3 | 01-01-1994 |
| | | | JP | H01319002 A | 25-12-1989 |
| | | | US | 4898448 A | 06-02-1990 |
| US 2017276892 | A1 | 28-09-2017 | AU | 2015316830 A1 | 13-04-2017 |
| | | | CN | 107076952 A | 18-08-2017 |
| | | | CN | 110456471 A | 15-11-2019 |
| | | | EP | 3195035 A1 | 26-07-2017 |
| | | | NZ | 730444 A | 24-04-2020 |
| | | | US | 2017276892 A1 | 28-09-2017 |
| | | | US | 2019250352 A1 | 15-08-2019 |
| | | | US | 2020233169 A1 | 23-07-2020 |
| | | | WO | 2016042032 A1 | 24-03-2016 |
| | | | ZA | 201701885 B | 26-06-2019 |
| JP 2004361893 | A | 24-12-2004 | JP | 4093475 B2 | 04-06-2008 |
| | | | JP | 2004361893 A | 24-12-2004 |
| US 2005111809 | A1 | 26-05-2005 | KEINE | | |

EPO FORM P0461

Für nähere Einzelheiten zu diesem Anhang : siehe Amtsblatt des Europäischen Patentamts, Nr.12/82